# EUROPEAN PATENT SPECIFICATION

(11) **EP 3 473 785 B1**
(45) Date of publication and mention of the grant of the patent: **22.07.2020**
(21) Application number: 18198643.1
(22) Date of filing: 04.10.2018
(51) Int. Cl.: E04H 12/18, E04H 12/22, F16M 11/26, F16M 11/28, F16M 11/30, F21L 14/00, F21V 21/06, F21V 21/10, F21V 21/22

(54) **TELESCOPIC MAST**
TELESKOPISCHER MAST
MÂT TÉLESCOPIQUE

(30) Priority: 20.10.2017 SE 1751299
(43) Date of publication of application: 24.04.2019
(73) Proprietor: EL-Björn AB, 334-21 Anderstorp (SE)
(72) Inventor: JOHANSSON, Lars, 335 71 Hestra (SE); POPAJA, Armin, 331 43 Värnamo (SE)
(74) Representative: Bergenstråhle Group AB

(56) References cited:
- CH-A- 58 534
- DE-A1- 2 617 166
- DE-C- 247 231
- US-A- 4 228 489
- US-A- 5 173 002
- US-A1- 2014 009 940
- US-B1- 6 273 662

## Description

### Technical field

The invention considers a portable telescopic mast for carrying an armature, for example a lighting armature, preferably within the so called low-cost segment.

### Background art

Different kinds of telescopic masts are used for example at construction sites, concerts etc., where there is a need of temporarily set up lights, loudspeakers or other equipment. The masts are used both indoors and outdoors and preferably have characteristics like low weight, being portable, being robust and weatherproof etc. Known telescopic masts within the low-cost segment normally are designed with a number of hollow tubes, telescopically displaceable relative to each other and with the widest tube part at the bottom of the mast in its using position, and then the mast extending upwards with smaller and smaller cross-sections of the individual tube sections. Such known telescopic masts often must be handled in a horizontal position, i.e. pulled out to full length in a horizontal position, and also equipped with for example lights in the horizontal position too. After this the mast can be put up in a vertical position. This implies that a lot of force must be applied on the mast when erecting it from horizontal to vertical position, which means ergonomic disadvantages and use of unnecessarily much man power. Further problems, with regards to a "normal" telescopic solution - from wide to narrow - seen from the bottom to the top, no totally safe locking arrangement can be provided. Known locking arrangements are in the form of a simple screw which only abuts the outside of the goods of an interior profile for locking the tube parts relative to one another. If a user turns the screw in the wrong direction when the telescopic mast is in its up-right position, the telescopic mast section is released and slides down with a great danger for the user.

A known solution is presented in document CA 2 821 292 A1 which discloses a portable light tower to provide high, bright light, and which has ground engaging elements and a telescoping mast secured to the base. The mast has a pivot and the telescoping mast is rotatable about the pivot between a transport position and an operating position, and the mast includes lighting elements at the top end of the telescoping mast. The mast is not a low-cost mast since it is more advance and has an electrically operated linear actuator mounted on the telescoping mast which extends and retracts the telescoping mast through a system of cables and pulleys.

Another solution is presented in US 2010/0005734 A1 and discloses an extendible mast which includes at least three columns having a plurality of column sections that telescopically nest one inside another. A base plate is connected to each column, and each of a plurality of brackets is also connected to each column. The plurality of brackets is positioned along the length of the mast when extended. The mast is also a more advanced and expensive variant compared to low-cost telescoping masts.

A complete other solution is presented in EP 2 085 690 B1, which discloses a mast of a determined length, but with a downward telescopic inner mast on which a lighting fixture is fastened. Through the telescopic inner mast part, the lighting fixture can be moved up and down along the mast. This solution is an expensive solution and do not offer a possibility to adjust the total length of the mast itself and can therefore not be used in the same way as the above described telescopic masts.

One solution is presented in DE 247 231 C which discloses a moveable telescopic mast arranged for carrying lights, which telescopic mast has a number of similar locking types, for locking telescopic mast sections to each other.

In US 4 228 489 A a portable stand apparatus for electric flood lights is disclosed. The stand apparatus, i.e. the mast is not telescopic but is instead built up by a plurality of identical mast section which are connectable and lockable to each other by a spring-loaded snap lock.

CH 58 534 A discloses two alternatives of a telescopic mast, wherein one alternative having a classic design with a wide mast section at the bottom and more and more narrow mast section upwards, telescopically arranged relative each other. This type has an internal threaded rod for facilitating the telescopic movement via a crank. The other solution has a reversed design where the mast extends from a narrow mast section at the bottom and more and more wide section upwards, telescopically arranged relative each other. This other has an external threaded rod for facilitating the telescopic movement via a crank.

In US 2014/0009940 a retraceable lighting system is presented. This solution comprises a housing with a bracket mounted to the housing to which bracket an extendable support member is pivotally connected. The support member comprises first and second hollow support members, where the second support member is a hollow tube displaceable relative the first support member and enclosing the first support member. A first locking device mounted on the first support member engages with the bracket by a spring-actuated pin, wherein the first support member is held in a raised position. A second locking device discloses a through hole arranged at the first and second support member and a pin arranged for insertion into the through hole secures the second support member relative a first support member in an extended position of the support member.

In US 5 173 002 A, a telescopic mast with a reversed design, where the mast extends from a narrow mast section at the bottom and a wider section upwards, is disclosed. The telescopic mast comprises a first locking device and a second locking device which is different compared to the first locking device. The solution is quite complex with a lot of details and a complex solution for setting the height, by using the first locking device with a toothed rod.

In US 6 273 662 B1, a telescopic mast having a lower part of the mast with a classic design (not reversed) and a first type of locking device, and an upper part which is arranged with an offset relative the lower part. The upper part has second type of locking device which differs from the first type of locking device.

In DE 26 17 166 A1, two types of locking devices are presented in relation to a stand. The locking devices are quite complex with a lot of details and the total solution of the stand is not cost efficient.

### Summary of the invention

It is an object of the invention to address at least some of the problems and issues outlined above. It is possible to achieve these objects and others by using a telescopic mast as defined in the attached independent claims.

According to the invention, a telescopic mast according to claim 1 is provided, which is a "reverse" telescopic modular mast (from narrow to wide), which preferably is constructed with standard profiles, and preferably each profile is less or equal to 1,5 meters. Because of the "reversed" design, the mast can be pulled out in a vertical position, locked and managed in a user-friendly height in front of a user. The telescopic mast can as well be pulled out in a horizontal position in a similar way as in prior art solutions, but it is preferred to handle the mast in its vertical position due to ergonomic reasons. The telescopic mast comprises a base part which is arranged to support the telescopic mast in a using position, which is a substantially vertical position, a telescopic part, which comprises a plurality of hollow mast sections, i.e. two or more mast sections, being telescopically displaceable relative to each other, and wherein at least a second mast section being telescopically displaceable relative to a first mast section. The first mast section is arranged to be attached to the base part. Further, the telescopic mast comprises at least one armature carrier, arranged for carrying the at least one armature, for example a lighting armature. The second mast section of the telescopic mast has a larger cross-section compared to the first mast section, and the second mast section is at least partly enclosing at least a portion of the first mast section in the using position of the telescopic mast. This means that the plurality of mast sections are telescopically arranged one outside the other, with start from the first mast section as the most narrow so that each mast section has a wider cross-section compared to former one seen from the bottom to the top referring to the using position. Each further mast section, at least one second mast section - or several mast sections, encloses the former mast section and thus have a bigger cross-section than the former section. By enclosing at least a portion of a first (or former) mast section, is meant both that the cross-section can be totally enclosing like a circular or rectangular cross-section, or with an open cross-section, for example like a C-shaped cross-section, and further that a part of the length of a mast section is enclosed by the next mast section. By this "reversed" (up-side-down) design, with the mast extending from narrow to wide seen in its up-right using position, a simple and cost-effective telescopic mast is disclosed, and which also is more weatherproof compared to prior art. The latter, because the up-side-down design prevents water, dirt and ice from entering the joints between the different mast sections. Further, the mast can be equipped with the armature carrier in an ergonomic height in front of the user, and then the mast can be extended in its up-right position, also in an ergonomic height in front of the user, and which is not possible with prior art telescopic masts.

Further, at least one of the plurality of mast sections comprises a plurality of recesses, and at least one enclosing mast section comprises at least one first type of locking device, arranged to engage with the at least one recess of an inner lying mast section. As a wider profile is arranged outside a narrower profile, this first type of locking arrangement can be used. With this solution, the mast sections can be pulled out in front of the user in an ergonomic height and in the using position of the mast, i.e. in the up-right position. The outermost mast section is firstly extended by the user in the up-right position and is locked by that the first locking device engages with the recess. It is now safe to extend the next mast section (if applicable) in the same way as the previous, in front of the user and in an ergonomic height, and by this a safe locking of the mast sections relative to each other is achieved. Prior art discloses a simple kind of screw locking, where an inner mast section is locked only by that a screw is screwed from an outer mast section until it abuts the surface of the inner section. Compared to prior art, the first locking device is a far safer solution. And by having a plurality of recesses, a plurality of safe locking positions is achieved, which provides a flexible setting of the total length of the mast. In each of the fixed lengths, the parts are safely locked to each other and if, accidentally, an unlocking of the locking device occurs, the upper part/parts will not fall further than the next lock position. Prior art solutions can fall all the way down and cause injuries to the user.

Further, the first type of locking device comprises a spring-loaded pin and a spring. The pin is arranged to automatically engage with a first end into the at least one recess of an inner lying mast section by means of the spring. When a recess of an inner mast section passes the first type of locking device the pin springs out and engages with the recess and by that, a self-locking mechanism is achieved. Prior art lacks such self-locking devices.

Further, at least one enclosing mast section comprises a second type of locking device. This second type of locking device is arranged to engage with an outside of an inner lying mast section, via a through hole in the enclosing mast section. This is more or less a normal screw locking device as in prior art solutions, which enables a completely optional length setting of the telescopic mast, but together with the first type of safe locking device, a double security is also achieved. If for some reason the second locking device is disabled, the first locking device is either already in a locking position or will snap into the safe locking position when the telescopic part starts to slide down. Another advantage is that the second type of locking device gives a stabilizing effect on the telescopic parts in their locked position. Double security with both a completely optional length setting and safely locked telescopic parts is not known in prior art.

According to a preferred embodiment, the first type of locking device comprises a first nut, fixedly arranged at a through hole of an enclosing mast section, and which first nut comprises an internal thread. Into the thread is a threaded sleeve arranged with a first end and through the sleeve is the pin extending. The pin comprises a knob for handling the pin in the locking situation. The knob is fixedly arranged at a second end of the pin, which second end facing away from the mast. In the locking position, the knob abuts an outer surface of a stop end of the sleeve, which is an end facing away from the mast. The spring is arranged inside the sleeve and encloses the pin inside the sleeve. The spring is restrained between a stop arranged on the pin and the inner surface of the stop end of the sleeve. When the knob is pulled in direction away from the mast, the first locking device will leave the recess and the lock is released. In this position, the knob does not abut the outer surface of the stop end of the sleeve. When the pin and the recess aligns, the pin will spring out in direction to the inner mast section and the pin will fully engage with the recess, but the inward motion is stopped by the knob abutting the stop end. A controlled and secure automatic lock is achieved by this first locking device, which is not known at prior art solutions.

According to an embodiment, the telescopic part comprising at least three hollow mast sections, wherein the second mast section is telescopically displaceable relative to at least the first mast section, and a third mast section is telescopically displaceable relative to at least the second mast section. Further, the third mast section is at least partly enclosing at least a part of the second mast section in the using position of the telescopic mast, i.e. in the same way as the second mast section encloses the first mast section. It is preferred, but not limiting, that each individual mast section has a maximum length of 1.5 meters. Further, a fourth mast section can be arranged in the same way as the other enclosing mast sections, and the mast can be extended between 2.3 meter up to 5 meters. It can therefore be used outdoors as well as indoors, since the length is adjustable to fit normal dwelling height up to a common height for outdoor use.

According to a preferred embodiment, the first mast section is fixed relative to the base part. As the first mast section doesn't need to be telescopic relative to the base part it is convenient to have it fixed to the base part, and by that, more or less be a part of the base part, when using/handling the telescopic mast. For example, the base part including the first mast section can be set up at a position where for example a lighting armature is needed. After this the telescopic part is installed on the first mast section and the mast is put up as described earlier. If the base part comprises for example a number of foot members, these may be pivotally attached to one end of the first mast section, which means that the first mast section is fixed relative to the base part. By the pivoting attachment, the foot members may be pivoted upwards when the mast is to be taken down and moved or stored, an thus the foot members can protect the first mast section and locks, which makes the mast easy to handle during transport and storing.

According to an embodiment of the above described second type of locking device, said locking device comprises a nut which is fixedly arranged at the enclosing mast section, at a hole in said mast section. The nut comprises an inner thread and a screw is engaged with the inner thread. By screwing the screw into the nut, and further through the hole in the enclosing mast section, the top will soon abut the outside of the inner lying mast section, and lock the same in this position.

According to an embodiment, at least one armature carrier is arranged at a mast section, normally at the uppermost mast section, for carrying an armature such as lighting armature, loud speakers etc. The armature carrier/carriers at least partly enclosing a portion of the mast section seen in the using position of the telescopic mast. The armature carrier is detachably fixed to the mast section by clamping force, when the armature carrier is fixed to a corresponding bracket, i.e. the bracket and the armature carrier are arranged on respective sides of the mast section. By this clamping arrangement, the armatures can be positioned anywhere along the mast section and in any direction, which means a great flexibility in positioning of the armatures. Prior art normally has a long T-bar arranged at the top of the uppermost mast section for carrying armatures, which means that the armatures are positioned next to each other on the T-bar and may be directed forwards or backwards relative to the T-bar. The inventive armature carrier is preferably short, compared to prior art T-bars. A system with short armature carriers are provided and by that the armature/equipment is arranged near the mast which gives less momentum force and makes the mast less sensitive for wind.

According to an embodiment, the cross-section of the mast sections is rectangular, and more preferred quadratic. This is a standard tube available at the market which means low cost, and the shape is preferred as it gives a guided telescopic movement where the position of the recesses correspond to the positions of the first type of locking device, why the safe locking is secured.

As an alternative to the just described embodiment, the cross-section is circular, which is enables a total flexibility in terms of directing the armature carrier in a completely optional direction.

According to an embodiment, the mast sections of the telescopic part are completely detachable from each other. The advantages are for example better ergonomics since each part can be handled/carried separately (less weight and easy handled). More benefits are that the mast is more easy to store when detached and that it is easy to replace a part if needed etc.

According to an embodiment of the invention, the base part comprises at least one mast support, which is arranged to hold the first mast section in the using position, and further comprises at least one base support, which is arranged for supporting the base part in keeping the telescopic mast in its using position, i.e. its upright position.

According to a preferred embodiment, the at least one base support consists of at least three elongated hollow foot members, respectively pivotally attached at one first end to a lower end of the first mast section seen in the using position of the telescopic mast. Each foot member is also pivotally attached at one end of a respective hinge bar, at a distance from the first end of the respective foot member. The respective hinge bar is further pivotally attached with its other end to a sliding member, which is arranged to slide along an outside of the first mast section. By this arrangement, for example when the telescopic mast should be taken down, carried away and stored, the foot members can be pivoted upwards, such that the mast sections and the locks of the mast sections are protected by the foot members. Since the conditions at for example a construction site is rough, dirt and the like may destroy the locks if the mast is lying directly on the ground. This solution prevents dirt and the like to reach the locks since the foot members protects the parts in the folded position.

In a preferred embodiment of the above described embodiment, the sliding member comprises a locking device, arranged to lock the sliding member relative to the first mast section. By this, the foot members may be locked in a wanted position, depending on the situation. The foot members may be set downwards if the ground is rough, planar if the ground is flat, or upwards for locking of the foot members in the protection position.

According to an alternative embodiment, the at least one base support is a container adapter. Said adapter comprises a bracket with a vertical part fixedly attached to the mast support, and a horizontal part on which the mast support is resting. Further, the horizontal part comprises a through hole and a bolt and the bolt is arranged with a container fitting adopted for insertion in a standard container corner. Thus, the same telescopic mast can be installed into a standard container, which often used at construction sites for storing tools, material etc.

The telescopic mast described above is especially suited for use with lighting armature.

Further possible features and benefits of this solution will become apparent from the detailed description below.

### Brief description of drawings

The solution will now be described in more detail by means of exemplary embodiments and with reference to the accompanying drawings, in which:
Fig. 1 is a perspective view of a complete telescopic mast according to the preferred embodiment of the invention.
Fig. 2a is a side view of the preferred telescopic mast in a dismounted state.
Fig. 2b is a perspective view of a base part of the telescopic mast.
Fig. 3a is a perspective view showing a first type of locking devices according to the invention, which locking devices are mounted on some of the telescopic parts.
Fig. 3b is a section through the telescopic mast and through the first type of locking device. The figure also showing a second type of locking device in perspective.
Fig. 3c-d are detailed views in section and perspective of the first type of locking device.
Fig. 4a is showing a perspective view of the telescopic mast in a folded state.
Fig. 4b is a perspective view of an alternative base part to the telescopic mast, namely a container adapter, arranged to hold the telescopic mast.

### Detailed description

Briefly described, a portable telescopic mast is provided, which is cost-efficient and well-functioning solution and that is designed in a "reversed" manner, that is narrow at the bottom and wider upwards. According to the preferred embodiment each profile is a standard profile, for example a quadratic standard profile. Interior profiles are provided with holes which are used for locking together with a resilient pin arranged at an outer profile. As a wider profile is arranged outside a narrower profile, this safe snap-locking arrangement can be used. The safe locking device together with a standard screw lock gives a possibility to freely chose the length of the mast but anyway have double security. If the screw lock is accidentally released, the snap-lock will snap into the next free hole, if the mast section starts to slide downwards. Further, the reverse solution provides better weather protection with less water, dirt and ice between the individual profiles. A new top is also provided, with a different solution of the fastening of lights etc. since no T-bar is used. Instead a system with short armature carriers are provided and by that the equipment is arranged near the mast which gives less momentum force and makes the mast less sensitive for wind. All parts are modular and can be disconnected. In a folded position, the locking screws are protected by the foot members of the mast, and the folded position also provides an ergonomic position for assembly of the equipment together with the armature carriers. To fit to a standard container, a special container adapter is also provided, which fits the modular concept of the mast. Another accessory is a holder (clip) arranged to hold cables in place adjacent to the mast.

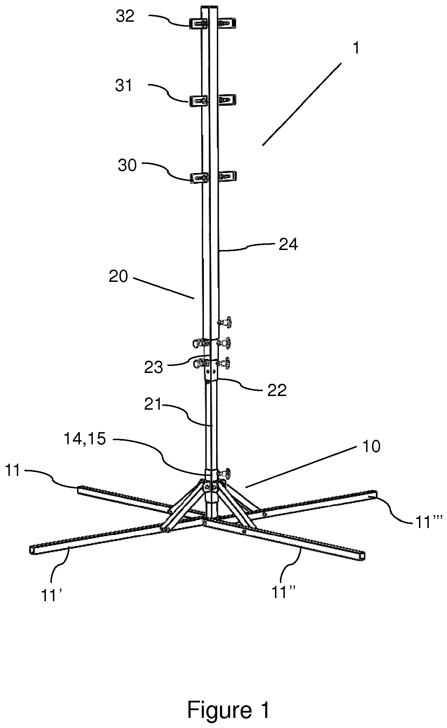

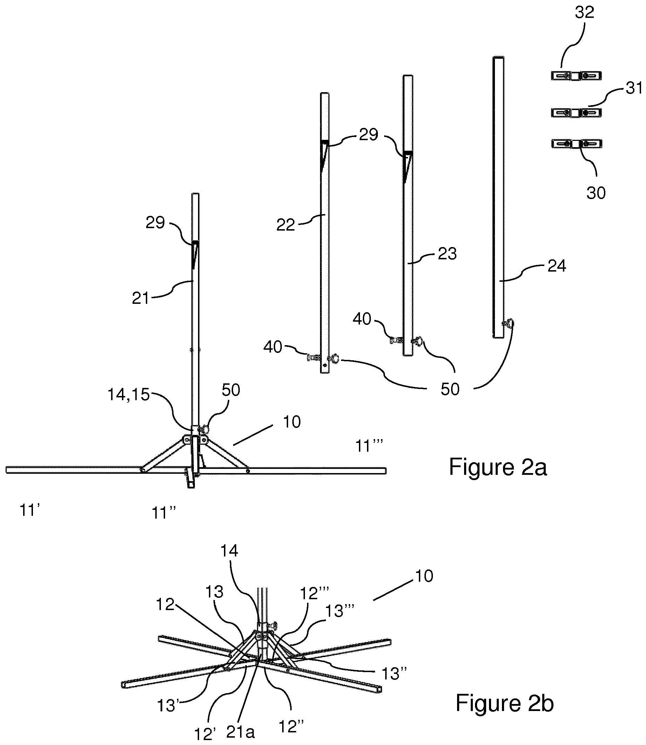

Fig. 1 shows a complete telescopic mast 1 for carrying at least one armature (not shown) according to a preferred embodiment of the invention. The telescopic mast 1 comprises a telescopic part 20 which comprises a plurality of hollow mast sections 21, 22, 23, 24, wherein said telescopic mast sections are telescopically displaceable relative to each other. The unique design of the telescopic mast 1 is that each mast section 21, 22, 23, 24 has a wider cross-section compared to former one seen from bottom to the top, instead of the common solution, with the widest mast section at the bottom. A second mast section 22, encloses the first mast section 21, and a third mast section 23 encloses the second mast section 22. Finally, a fourth mast section 24 encloses the third mast section 23, and the mast sections 22, 23, 24 are slidable along an inner mast section 21, 22, 23 by a telescopic motion. In the preferred embodiment, the first telescopic mast section 21 is arranged to a base part 10, which base part 10 is arranged to support the telescopic mast 1 in a using position, which is a substantially vertical position. The base part 10, must not be a part of the telescopic mast 1, but it is most preferred that the base part 10 is fixedly attached to the first mast section 21. The base part 10 comprises four foot members 11, 11', 11", 11"' which are pivotally attached to the first mast section 21 (see also Fig. 2b and the corresponding description). Further, the base part 10 comprises a mast support 15, arranged to hold the first mast section 21 in the using position. The mast support 15 in the preferred embodiment is a sliding member 14, which may slide along the first mast section 21, which will be more explained in Fig. 2a-b. The telescopic mast is arranged to carry at least one armature. In Fig. 1 three armature carriers 30, 31, 32 can be seen, which respective armature carrier is arranged for carrying at least one armature (not shown) each. The respective armature carrier 30, 31, 32 is at least partly enclosing a mast section and may be positioned in any direction around the mast section, preferably the uppermost, fourth mast section 24, and in any position along the same. Since the armature carriers 30, 31, 32 are clamped to the mast section, for example by a corresponding bracket (not shown) the position of each armature carrier 30, 31, 32 is totally flexible. The armature, for example a lighting armature, is fixed to a bracket, which is screwed to the armature carrier 30, 31, 32, and the clamping force holds the armature carrier 30, 31, 32 and the armature in place on the telescopic mast 1.

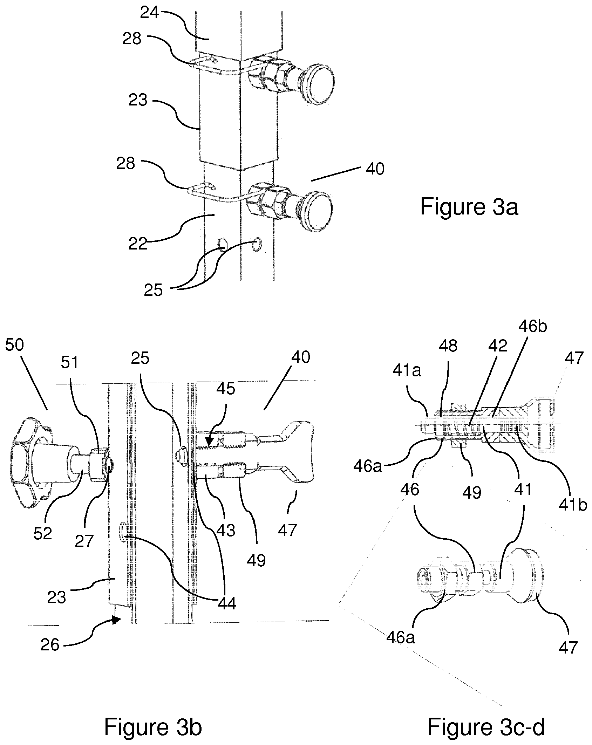

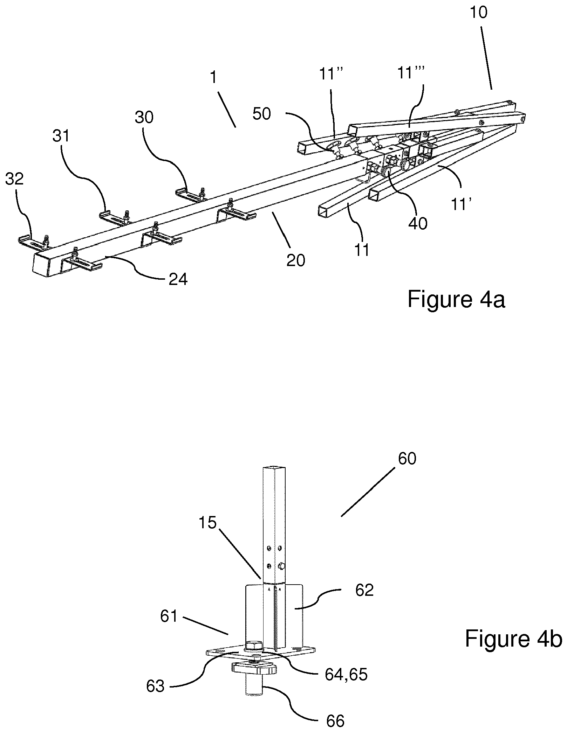

Fig. 2a is showing a side view of the preferred telescopic mast in a dismounted state, showing the parts one by one, and Fig. 2b is showing a perspective view of the base part 10 of the telescopic mast 1. As said above, the first mast section 21 preferably is pivotally fixed to the foot members 11, 11', 11", 11"', and the sliding member 14 / mast support 15 supports the first mast section 21 in its upright position. The sliding member 14 also comprises a locking device 50, for example a screw lock of the same type which will be described in Fig. 3b. The base part 10 comprises the mast support 15 and at least one base support 11, but preferred is the base support 11 at least three, and most preferred four elongated hollow foot members 11, 11', 11", 11'", respectively pivotally attached at one first end 12, 12', 12", 12'" to a lower end 21a of the first mast section 21, seen in the using position of the telescopic mast 1. Further, each foot member 11, 11', 11", 11'" is pivotally attached at one end of a respective hinge bar 13, 13', 13", 13"', at a distance from the first end 12, 12', 12", 12'" of the respective foot member 11, 11', 11", 11'". The respective hinge bar 13, 13', 13", 13'" is also pivotally attached with its other end to the sliding member 14. By this solution, the foot members 11, 11', 11", 11'" may be set in different angels relative to the first mast section 21, for example pointing downwards if the ground is rough, or like in the figure, a flat position, perpendicular relative to the first mast section 21. One option, shown in Fig. 4a, is that the foot members 11, 11', 11", 11'" also can be directed upwards, along the first mast section 21, which is preferred in a folded state of the telescopic mast 1. It is preferred that each mast section 21, 22, 23, 24 has a maximum length of 1.5 meters, which makes it easy to handle the mast 1 in an ergonomic way, because all parts have low weight and the telescopic mast 1 can be mounted/ejected in front of the user in a vertical position. At a distance from the upper ends of the first, the second and the third mast sections 21, 22, 23, a stop mark 29 can be seen. This stop mark 29 provides a warning to the user that the maximum length is reached and prevents further extension of the mast sections 22, 23, 24 relative to the inner mast sections 21, 22, 23. A first type of safe locking device 40 device is arranged at enclosing mast sections 22, 23, 24 and further a second type of locking device 50 is also arranged at enclosing mast sections 22, 23, 24 and also at the sliding member 14. The locking devices 40, 50 will be explained below with Fig. 3a-d.

Fig. 3a-d shows the details and function of the first type of locking device 40 as well as the second type of locking device 50. Fig. 3a is a perspective view of a part of the telescopic mast 1, showing the second mast section 22 with the third mast section 23 enclosing a part of it, and the fourth mast section 24, enclosing the third mast section 23. Interior mast sections 21, 22, 23, comprising at least one recess 25, here visible on the second mast section 22. It is preferred with several recesses 25 in different positions both along the length as well as on all sides of the interior mast sections, 21, 22, 23. As seen in Fig. 3b the first type of locking device 40 is arranged to engage with the recess 25 for locking the enclosing mast section 22, 23, 24 relative to the inner mast section 21, 22, 23. As seen in Fig. 3b-d the first type of locking device 40 comprises a spring-loaded pin 41 and a spring 42, and a first end 41a of the pin 41 is arranged to automatically engage with the at least one recess 25 of the inner lying mast section 21, 22, 23, by means of the spring-force from the spring 42. The first type of locking device 40 further comprises a first nut 43, fixedly arranged at a through hole 44 of an enclosing mast section 22, 23, 24, which first nut 43 comprises an internal thread 45, into which a threaded sleeve 46 is arranged with a first end 46a. The pin 41 extends through the sleeve 46 and the pin 41 comprises a knob 47, which is fixedly arranged at a second end 41b of the pin 41. The knob 47 abuts an outer surface of a stop end 46b of the sleeve 46 in a locking position of the first type of locking device 40. The spring 42 is arranged inside the sleeve and encloses the pin 41 inside the sleeve 46. Further the spring 42 is restrained between a stop 48 arranged on the pin 41 and an inner surface of the stop end 46b of the sleeve 46. A second nut 49 is also arranged on the threaded sleeve 46, and when the first type of locking device 46 is screwed into the first nut 43, the second nut 49 is also screwed towards the first nut 43 for clamping a specially designed holder 28, arranged for holding electrical cables and the like. The first type of locking device 40 is automatically engaging with the recess 25 when the recess passing the first locking device 40 during the telescopic motion, since the pin 41 is spring-loaded by the spring 42.

In Fig. 3b the second type of locking device 50 is visible. Said second type of locking device 50 is arranged to engage with an outside 26 of an inner lying mast section 21, 22, 23, via a through hole 27 of the enclosing mast section 22, 23, 24. The second type of locking device 50 comprises a third nut 51, fixedly arranged at the enclosing mast section 22, 23, 24 and at the through hole 27. Further, the second locking device 50 comprises a screw 52 engaged with an inner thread of the third nut 51, and the screw 52 is arranged to lock an inner lying mast section 21, 22, 23 relative to the enclosing mast section 22, 23, 24 when abutting the outside 26 of the inner lying mast section 21, 22, 23.

Fig. 4a shows a perspective view of the telescopic mast 1 including the base part 10 and the telescopic part 20, in its folded state. In this state, the mast 1 is portable in an easy manner as well as storable, and it can be seen that the locking devices 40, 50 and the joints between the mast sections 21, 22, 23, 24 are protected in this position by means of the foot members 11, 11', 11", 11'''. In this position it is also quite convenient to assemble the armatures on the armature carriers 30, 31, 32.

Fig. 4b is a perspective view of an alternative base part to the telescopic mast, namely a container adapter 60, arranged to hold the telescopic mast 1 in its using position (vertical position). The container adapter 60 comprises a bracket 61 with a vertical part 62, fixedly attached to the mast support 15, and a horizontal part 63 on which the mast support 15 is resting. Further, the horizontal part 63 comprising a through hole 64 and a bolt 65 and the bolt 65 is arranged with a container fitting 66 adopted for insertion in a standard container corner. Thus, the same telescopic mast 1 can be installed into a standard container, which often is used at construction sites for storing tools, material etc. In the same manner as the above described base part 10, and mast sections 21, 22, 23, 24, the container adapter 60 has the narrowest part suited for enclosing mast sections.

## Claims

1. A telescopic mast (1) comprising:
a base part (10) being arranged to support the telescopic mast (1) in a using position, which is a substantially vertical position,
a telescopic part (20) comprising a plurality of hollow mast sections (21, 22, 23, 24) being telescopically displaceable relative to each other, and wherein at least a second mast section (22) being telescopically displaceable relative to a first mast section (21), and the first mast section (21) is arranged to be attached to the base part (10),
at least one armature carrier (30, 31, 32) arranged for carrying at least one armature,
and the second mast section (22) has a larger cross section compared to the first mast section (21), and the second mast section (22) is at least partly enclosing at least a portion of the first mast section (21) in the using position of the telescopic mast (1), wherein the plurality of mast sections (21, 22, 23, 24) are telescopically arranged one outside the other so that each mast section has a wider cross-section compared to former one seen from the bottom to the top referring to the using position, wherein at least one of the mast sections (21, 22, 23, 24) comprises a plurality of recesses (25, 25', 25", 25ⁿ), and at least one enclosing mast section (22, 23, 24) comprises at least one first type of locking device (40) arranged to engage with the at least one recess (25) of an inner lying mast section (21, 22, 23), wherein the first type of locking device (40) comprises a spring-loaded pin (41) and a spring (42), and a first end (41a) of the pin (41) is arranged to automatically engage with the at least one recess (25) of an inner lying mast section (21, 22, 23) by means of the spring-force from the spring (42),
wherein at least one enclosing mast section (22, 23, 24) comprises a second type of locking device (50), **characterized in that** the second type of locking device (50) is arranged to engage with an outside (26) of an inner lying mast section (21, 22, 23), via a through hole (27) of the enclosing mast section (22, 23, 24).

2. The telescopic mast (1) according to claim 1, wherein the first type of locking device (40) comprises a first nut (43), fixedly arranged at a through hole (44) of an enclosing mast section (22, 23, 24) and which first nut (43) comprises an internal thread (45), into which a threaded sleeve (46) is arranged with a first end (46a), and through which sleeve (46) the pin (41) extends, and the pin (41) comprises a knob (47) fixedly arranged at a second end (41b) of the pin (41), and which knob (47) abuts an outer surface of a stop end (46b) of the sleeve (46) in a locking position, and the spring (42) encloses the pin (41) inside the sleeve (46) and the spring (42) is restrained between a stop (48) arranged on the pin (41) and the inner surface of the stop end (46b) of the sleeve (46).

3. The telescopic mast (1) according to any of the preceding claims, wherein the telescopic part (20) comprising at least three hollow mast sections (21, 22, 23, 24), wherein the second mast section (22) is telescopically displaceable relative to the first mast section (21), a third mast section (23) is telescopically displaceable relative to at least the second mast section (22), and wherein the third mast section (23) is at least partly enclosing at least a part of the second mast section (22) in the using position of the telescopic mast (1).

4. The telescopic mast (1) according to any of the preceding claims, wherein the first mast section (21) is fixed relative to the base part (10).

5. The telescopic mast (1) according to any of the preceding claims, wherein the second type of locking device (50) comprising a third nut (51) fixedly arranged at the enclosing mast section (22, 23, 24) and at the through hole (27), and further comprising a screw (52) engaged with an inner thread of the third nut (51), and the screw (52) is arranged to lock an inner lying mast section (21, 22, 23) relative to the enclosing mast section (22, 23, 24) when abutting the outside (26) of the inner lying mast section (21, 22, 23).

6. The telescopic mast (1) according to any of the preceding claims, wherein the at least one armature carrier (30, 31, 32) at least partly enclosing a portion of at least one mast section (22, 23, 24), seen in the using position of the telescopic mast (1), and which armature carrier (30, 31, 32) is detachably fixed to the mast section (22, 23, 24) by clamping force when the armature carrier (30, 31, 32) is fixed to a corresponding bracket, wherein the armature carrier (30, 31, 32) and the bracket is arranged on respective sides of the mast section (22, 23, 24).

7. The telescopic mast (1) according to any of the preceding claims, wherein the cross-section of the mast sections (21, 22, 23, 24) are rectangular, and more preferred quadratic.

8. The telescopic mast (1) according to any one of claims 1 - 6, wherein the cross-section of the mast sections (21, 22, 23, 24) are circular.

9. The telescopic mast (1) according to any of the preceding claims, wherein the mast sections (21, 22, 23, 24) of the telescopic part (20) are detachable from each other.

10. The telescopic mast (1) according to any of the preceding claims, wherein the base part (10) comprising:
at least one mast support (15), arranged to hold the first mast section (21) in the using position,
at least one base support (11), arranged for supporting the base part (10) in keeping the telescopic mast (1) in its using position.

11. The telescopic mast (1) according to claim 10, wherein the at least one base support (11) is at least three elongated hollow foot members (11, 11', 11", 11'") respectively pivotally attached at one first end (12, 12', 12", 12'") to a lower end (21a) of the first mast section (21) seen in the using position of the telescopic mast (1), and further each foot member (11, 11', 11", 11'") is pivotally attached at one end of a respective hinge bar (13, 13', 13", 13'"), at a distance from the first end (12, 12', 12", 12'") of the respective foot member (11, 11', 11", 11"'), and the respective hinge bar (13, 13', 13", 13'") is further pivotally attached with its other end to a sliding member (14), which is arranged to slide along an outside of the first mast section (21).

12. The telescopic mast (1) according to claim 11, wherein the sliding member (14) comprising one locking device (50) for locking the sliding member relative to the first mast section (21).

13. The telescopic mast (1) according to claim 10, wherein the at least one base support (11) is a container adapter (60), comprising a bracket (61) with a vertical part (62) fixedly attached to the mast support (15), and a horizontal part (63) on which the mast support (15) is resting seen in the using position of the telescopic mast (1), and further the horizontal part (63) comprising a through hole (64) and a bolt (65), the bolt (65) arranged with a container fitting (66) adopted for insertion in a standard container corner.

14. A telescopic mast (1) according to any of claims 1 - 9 for use with a lighting armature.

## Patentansprüche

1. Teleskopischer Mast (1), der Folgendes umfasst:
einen Basisteil (10), der dazu angeordnet ist, den teleskopischen Mast (1) in einer Verwendungsposition zu stützen, die eine im Wesentlichen vertikale Position ist,
einen teleskopischen Teil (20), umfassend mehrere hohle Mastabschnitte (21, 22, 23, 24), die relativ zueinander teleskopisch versetzbar sind, und wobei zumindest ein zweiter Mastabschnitt (22) relativ zu einem ersten Mastabschnitt (21) teleskopisch versetzbar ist, und wobei der erste Mastabschnitt (21) dazu angeordnet ist, an dem Basisteil (10) befestigt zu werden,
zumindest einen Armaturenträger (30, 31, 32), der dazu angeordnet ist, zumindest eine Armatur zu tragen,
und wobei der zweite Mastabschnitt (22) einen größeren Querschnitt im Vergleich zum ersten Mastabschnitt (21) aufweist und wobei der zweite Mastabschnitt (22) zumindest teilweise einen Teil des ersten Mastabschnitts (21) in der Verwendungsposition des teleskopischen Masts (1) einschließt, wobei die mehreren Mastabschnitte (21, 22, 23, 24) teleskopisch einer außerhalb des anderen angeordnet sind, sodass jeder Mastabschnitt einen breiteren Querschnitt als ein früherer hat, gesehen von unten nach oben bezüglich der Verwendungsposition, wobei zumindest einer der Mastabschnitte (21, 22, 23, 24) mehrere Vertiefungen (25, 25', 25'', 25ⁿ) umfasst und zumindest ein einschließender Mastabschnitt (22, 23, 24) zumindest einen ersten Typ von Verriegelungsvorrichtung (40) umfasst, angeordnet, um mit der zumindest einen Vertiefung (25) eines weiter innen liegenden Mastabschnitts (21, 22, 23) in Eingriff zu kommen, wobei der erste Typ von Verriegelungsvorrichtung (40) einen federbelasteten Stift (41) und eine Feder (42) umfasst und wobei ein erstes Ende (41a) des Stifts (41) dazu angeordnet ist, automatisch mit der zumindest einen Vertiefung (25) eines weiter innen liegenden Mastabschnitts (21, 22, 23) mittels der Federkraft von der Feder (42) in Eingriff zu kommen, wobei der zumindest eine einschließende Mastabschnitt (22, 23, 24) einen zweiten Typ von Verriegelungsvorrichtung (50) umfasst,
**dadurch gekennzeichnet, dass** der zweite Typ von Verriegelungsvorrichtung (50) dazu angeordnet ist, mit einer Außenseite (26) eines weiter innen liegenden Mastabschnitts (21, 22, 23) über ein Durchgangsloch (27) des einschließenden Mastabschnitts (22, 23, 24) in Eingriff zu kommen.

2. Teleskopischer Mast (1) nach Anspruch 1, wobei der erste Typ von Verriegelungsvorrichtung (40) eine erste Mutter (43) umfasst, fest an einem Durchgangsloch (44) eines einschließenden Mastabschnitts (22, 23, 24) angeordnet, und wobei die erste Mutter (43) ein Innengewinde (45) umfasst, in dem eine Gewindehülse (46) mit einem ersten Ende (46a) angeordnet ist, und wobei sich durch die Hülse (46) der Stift (41) erstreckt, und wobei der Stift (41) einen Knopf (47) umfasst, fest an einem zweiten Ende (41b) des Stifts (41) angeordnet, und wobei der Knopf (47) in einer verriegelten Position an einer äußeren Oberfläche eines Anschlagendes (46b) der Hülse (46) anliegt, und wobei die Feder (42) den Stift (41) im Inneren der Hülse (46) einschließt und die Feder (42) zwischen einem an dem Stift (41) angeordneten Anschlag (48) und der inneren Oberfläche des Anschlagendes (46b) der Hülse (46) zurückgehalten wird.

3. Teleskopischer Mast (1) nach einem der vorhergehenden Ansprüche, wobei der teleskopische Teil (20) mindestens drei hohle Mastabschnitte (21, 22, 23, 24) umfasst, wobei der zweite Mastabschnitt (22) teleskopisch relativ zum ersten Mastabschnitt (21) versetzbar ist, wobei ein dritter Mastabschnitt (23) teleskopisch relativ zu zumindest dem zweiten Mastabschnitt (22) versetzbar ist, und wobei der dritte Mastabschnitt (23) zumindest teilweise zumindest einen Teil des zweiten Mastabschnitts (22) in der Verwendungsposition des teleskopischen Masts (1) einschließt.

4. Teleskopischer Mast (1) nach einem der vorhergehenden Ansprüche, wobei der erste Mastabschnitt (21) relativ zum Basisteil (10) fest ist.

5. Teleskopischer Mast (1) nach einem der vorhergehenden Ansprüche, wobei der zweite Typ von Verriegelungsvorrichtung (50) eine dritte Mutter (51) umfasst, die fest an dem einschließenden Mastabschnitt (22, 23, 24) und am Durchgangsloch (27) angeordnet ist, und ferner eine Schraube (52) umfasst, die im Eingriff mit einem Innengewinde der dritten Mutter (51) ist, und wobei die Schraube (52) dazu angeordnet ist, einen weiter innen liegenden Mastabschnitt (21, 22, 23) relativ zum einschließenden Mastabschnitt (22, 23, 24) zu verriegeln, wenn sie an der Außenseite (26) des weiter innen liegenden Mastabschnitts (21, 22, 23) anliegt.

6. Teleskopischer Mast (1) nach einem der vorhergehenden Ansprüche, wobei der zumindest eine Armaturenträger (30, 31, 32) zumindest teilweise einen Teil von zumindest einem Mastabschnitt (22, 23, 24) einschließt, gesehen in der Verwendungsposition des teleskopischen Masts (1), und wobei der Armaturenträger (30, 31, 32) durch Klemmkraft lösbar an dem Mastabschnitt (22, 23, 24) befestigt ist, wenn der Armaturenträger (30, 31, 32) an einer entsprechenden Halterung befestigt ist, wobei der Armaturenträger (30, 31, 32) und die Halterung auf entsprechenden Seiten des Mastabschnitts (22, 23, 24) angeordnet sind.

7. Teleskopischer Mast (1) nach einem der vorhergehenden Ansprüche, wobei die Querschnitte der Mastabschnitte (21, 22, 23, 24) rechteckig, und eher vorzuziehen quadratisch, sind.

8. Teleskopischer Mast (1) nach einem der Ansprüche 1 - 6, wobei die Querschnitte der Mastabschnitte (21, 22, 23, 24) kreisförmig sind.

9. Teleskopischer Mast (1) nach einem der vorhergehenden Ansprüche, wobei die Mastabschnitte (21, 22, 23, 24) des teleskopischen Teils (20) voneinander lösbar sind.

10. Teleskopischer Mast (1) nach einem der vorhergehenden Ansprüche, wobei der Basisteil (10) Folgendes umfasst:
zumindest eine Maststütze (15), dazu angeordnet, den ersten Mastabschnitt (21) in der Verwendungsposition zu halten,
zumindest eine Basisstütze (11), dazu angeordnet, den Basisteil (10) beim Halten des teleskopischen Masts (1) in seiner Verwendungsposition zu unterstützen.

11. Teleskopischer Mast (1) nach Anspruch 10, wobei die zumindest eine Basisstütze (11) mindestens drei längliche hohle Fußelemente (11, 11', 11'', 11''') ist, die jeweils schwenkbar an einem ersten Ende (12, 12', 12'', 12''') an einem unteren Ende (21a) des ersten Mastabschnitts (21) befestigt sind, gesehen in der Verwendungsposition des teleskopischen Masts (1), und wobei ferner jedes Fußelement (11, 11', 11'', 11''') schwenkbar an einem Ende einer entsprechenden Scharnierleiste (13, 13', 13'', 13"'), bei einem Abstand vom ersten Ende (12, 12', 12'', 12''') des entsprechenden Fußelements (11, 11', 11'', 11''') befestigt ist, und wobei die entsprechende Scharnierleiste (13, 13', 13'', 13''') ferner schwenkbar mit ihrem anderen Ende an einem gleitenden Element (14) befestigt ist, das dazu angeordnet ist, entlang einer Außenseite des ersten Mastabschnitts (21) zu gleiten.

12. Teleskopischer Mast (1) nach Anspruch 11, wobei das gleitende Element (14) eine Verriegelungsvorrichtung (50) zum Verriegeln des gleitenden Elements relativ zum ersten Mastabschnitt (21) umfasst.

13. Teleskopischer Mast (1) nach Anspruch 10, wobei die zumindest eine Basisstütze (11) ein Behälteradapter (60) ist, der eine Halterung (61) mit einem vertikalen Teil (62), der fest an der Maststütze (15) befestigt ist, und einem horizontalen Teil (63), an dem die Maststütze (15) anliegt, wenn in der Verwendungsposition des teleskopischen Masts (1) gesehen, umfasst, und wobei ferner der horizontale Teil (63) ein Durchgangsloch (64) und eine Schraube (65) umfasst, wobei die Schraube (65) mit einem Behälteranschlussstück (66), angepasst zur Einführung in die Ecke eines Standardbehälters, angeordnet ist.

14. Teleskopischer Mast (1) nach einem der Ansprüche 1 - 9 zur Verwendung mit einer Beleuchtungsarmatur.

## Revendications

1. Mât télescopique (1), comprenant :
une partie de base (10) prévue pour supporter le mât télescopique (1) dans une position d'utilisation, qui est une position sensiblement verticale,
une partie télescopique (20) comprenant une pluralité de sections de mât creuses (21, 22, 23, 24) pouvant être déplacées de manière télescopique les unes par rapport aux autres, et au moins une deuxième section de mât (22) pouvant être déplacée de manière télescopique par rapport à une première section de mât (21), et la première section de mât (21) étant prévue pour être attachée à la partie de base (10),
au moins un support d'armature (30, 31, 32) prévu pour porter au moins une armature,
et la deuxième section de mât (22) ayant une plus grande section transversale que la première section de mât (21), et la deuxième section de mât (22) renfermant au moins en partie au moins une portion de la première section de mât (21) dans la position d'utilisation du mât télescopique (1), la pluralité de sections de mât (21, 22, 23, 24) étant disposées de manière télescopique à l'extérieur les unes des autres de telle sorte que chaque section de mât présente une section transversale plus large qu'une section précédente, vu de bas en haut en se référant à la position d'utilisation, au moins l'une des sections de mât (21, 22, 23, 24) comprenant une pluralité de renfoncements (25, 25', 25'', 25ⁿ), et
au moins une section de mât enveloppante (22, 23, 24) comprenant au moins un premier type de dispositif de verrouillage (40) prévu pour venir en prise avec l'au moins un renfoncement (25) d'une section de mât située à l'intérieur (21, 22, 23), le premier type de dispositif de verrouillage (40) comprenant une goupille chargée par ressort (41) et un ressort (42), et une première extrémité (41a) de la goupille (41) étant prévue pour venir en prise automatiquement avec l'au moins un renfoncement (25) d'une section de mât située à l'intérieur (21, 22, 23) au moyen de la force de ressort du ressort (42), au moins une section de mât enveloppante (22, 23, 24) comprenant un deuxième type de dispositif de verrouillage (50), **caractérisé en ce que** le deuxième type de dispositif de verrouillage (50) est prévu pour venir en prise avec une partie extérieure (26) d'une section de mât située à l'intérieur (21, 22, 23) par le biais d'un trou traversant (27) de la section de mât enveloppante (22, 23, 24).

2. Mât télescopique (1) selon la revendication 1, dans lequel le premier type de dispositif de verrouillage (40) comprend un premier écrou (43) disposé de manière fixe au niveau d'un trou traversant (44) d'une section de mât enveloppante (22, 23, 24) et lequel premier écrou (43) comprend un filetage interne (45) dans lequel est disposé un manchon fileté (46) avec une première extrémité (46a), et à travers lequel manchon (46) s'étend la goupille (41), et la goupille (41) comprenant un bouton (47) disposé fixement au niveau d'une deuxième extrémité (41b) de la goupille (41), et lequel le bouton (47) bute contre une surface extérieure d'une extrémité de butée (46b) du manchon (46) dans une position de verrouillage, et le ressort (42) renfermant la goupille (41) à l'intérieur du manchon (46) et le ressort (42) étant retenu entre une butée (48) disposé sur la goupille (41) et la surface intérieure de l'extrémité de butée (46b) du manchon (46) .

3. Mât télescopique (1) selon l'une quelconque des revendications précédentes, la partie télescopique (20) comprenant au moins trois sections de mât creuses (21, 22, 23, 24), la deuxième section de mât (22) étant déplaçable de manière télescopique par rapport à la première section de mât (21), une troisième section de mât (23) étant déplaçable de manière télescopique par rapport à au moins la deuxième section de mât (22), et la troisième section de mât (23) renfermant au moins en partie au moins une partie de la deuxième section de mât (22) dans la position d'utilisation du mât télescopique (1).

4. Mât télescopique (1) selon l'une quelconque des revendications précédentes, dans lequel la première section de mât (21) est fixe par rapport à la partie de base (10).

5. Mât télescopique (1) selon l'une quelconque des revendications précédentes, dans lequel le deuxième type de dispositif de verrouillage (50) comprend un troisième écrou (51) disposé fixement au niveau de la section de mât enveloppante (22, 23, 24) et au niveau du trou traversant (27), et comprenant en outre une vis (52) en prise avec un filetage interne du troisième écrou (51), et la vis (52) étant prévue pour verrouiller une section de mât située à l'intérieur (21, 22, 23) par rapport à la section de mât enveloppante (22, 23, 24) lorsqu'elle bute contre l'extérieur (26) de la section de mât située à l'intérieur (21, 22, 23).

6. Mât télescopique (1) selon l'une quelconque des revendications précédentes, dans lequel l'au moins un support d'armature (30, 31, 32) renferme au moins en partie une portion d'au moins une section de mât (22, 23, 24), vu dans la position d'utilisation du mât télescopique (1), et lequel support d'armature (30, 31, 32) est fixé de manière détachable à la section de mât (22, 23, 24) par une force de serrage lorsque le support d'armature (30, 31, 32) est fixé à une console correspondante, le support d'armature (30, 31, 32) et la console étant disposés sur des côtés respectifs de la section de mât (22, 23, 24).

7. Mât télescopique (1) selon l'une quelconque des revendications précédentes, dans lequel la section transversale des sections de mât (21, 22, 23, 24) est rectangulaire, de préférence carrée.

8. Mât télescopique (1) selon l'une quelconque des revendications 1 à 6, dans lequel la section transversale des sections de mât (21, 22, 23, 24) est circulaire.

9. Mât télescopique (1) selon l'une quelconque des revendications précédentes, dans lequel les sections de mât (21, 22, 23, 24) de la partie télescopique (20) peuvent être détachées les unes des autres.

10. Mât télescopique (1) selon l'une quelconque des revendications précédentes, dans lequel la partie de base (10) comprend :
au moins un support de mât (15) prévu pour maintenir la première section de mât (21) dans la position d'utilisation,
au moins un support de base (11) prévu pour supporter la partie de base (10) en maintenant le mât télescopique (1) dans sa position d'utilisation.

11. Mât télescopique (1) selon la revendication 10, dans lequel l'au moins un support de base (11) est constitué par au moins trois organes de pied creux allongés (11, 11', 11'', 11''') respectivement fixés de manière pivotante par une extrémité (12, 12', 12", 12''') à une extrémité inférieure (21a) de la première section de mât (21), vu dans la position d'utilisation du mât télescopique (1), et chaque organe de pied (11, 11', 11'', 11''') étant en outre fixé de manière pivotante à une extrémité d'une barre articulée respective (13, 13', 13'', 13''') à distance de la première extrémité (12, 12', 12'', 12''') de l'organe de pied respectif (11, 11', 11'', 11'''), et la barre articulée respective (13, 13', 13'', 13''') étant en outre fixée de manière pivotante par son autre extrémité à un organe coulissant (14) qui est prévu pour coulisser le long d'une partie extérieure de la première section de mât (21).

12. Mât télescopique (1) selon la revendication 11, dans lequel l'organe coulissant (14) comprend un dispositif de verrouillage (50) pour verrouiller l'organe coulissant par rapport à la première section de mât (21).

13. Mât télescopique (1) selon la revendication 10, dans lequel l'au moins un support de base (11) est un adaptateur de conteneur (60), comprenant une console (61) avec une partie verticale (62) attachée fixement au support de mât (15) et une partie horizontale (63) sur laquelle repose le support de mât (15), vu dans la position d'utilisation du mât télescopique (1), et la partie horizontale (63) comprenant en outre un trou traversant (64) et un boulon (65), le boulon (65) étant agencé avec un raccord de conteneur (66) prévu pour l'insertion dans un coin d'un conteneur standard.

14. Mât télescopique (1) selon l'une quelconque des revendications 1 à 9, pour l'utilisation avec une armature d'éclairage.
